Europäisches Patentamt

European Patent Office

Office européen des brevets

(11) Veröffentlichungsnummer: **0 133 222**
**B1**

# (12) EUROPÄISCHE PATENTSCHRIFT

(45) Veröffentlichungstag der Patentschrift:
08.10.86

(21) Anmeldenummer: 84108003.9

(22) Anmeldetag: 09.07.84

(51) Int. Cl.⁴: **B 01 D 53/00**

(54) Verfahren zur biologischen Abluftreinigung.

(30) Priorität: 20.07.83 DE 3326057

(43) Veröffentlichungstag der Anmeldung:
20.02.85 Patentblatt 85/8

(45) Bekanntmachung des Hinweises auf die Patenterteilung:
08.10.86 Patentblatt 86/41

(84) Benannte Vertragsstaaten:
CH DE FR GB IT LI NL SE

(56) Entgegenhaltungen:
EP - A - 0 074 100
DE - A - 2 237 929
US - A - 3 828 525
US - A - 4 203 838

(73) Patentinhaber: BAYER AG, Konzernverwaltung RP
Patentabteilung, D-5090 Leverkusen 1 Bayerwerk (DE)

(72) Erfinder: Schmidt, Friedrich, Dr., In den Birken 77,
D-5600 Wuppertal 1 (DE)

ACTORUM AG

# Beschreibung

Die vorliegende Erfindung betrifft ein Verfahren zur Abgasreinigung, bei dem schadstoffhaltige und sauerstoffhaltige Gase mit einer wässrigen Mikroorganismensuspension in Kontakt gebracht werden, wobei die Schadstoffe aus dem Abgas entfernt werden.

Verfahren der genannten Art sind an sich bekannt (vgl., z.B., EP-A-0074100). Jedoch liegen in Abgasen die Schadstoffkonzentrationen im allgemeinen in so niedriger Konzentration vor, dass in der wässrigen Suspension nur eine geringe Biomassenkonzentration aufrechterhalten werden kann. Bekannte Verfahren der genannten Art benötigen daher grosse Volumina und Umwälzmengen der wässrigen Mikroorganismensuspension, um bei der durch die geringe Mikroorganismenkonzentration bedingten Abbauleistungsdichte hinreichende Mengen an Schadstoffen zu entfernen.

Der vorliegenden Erfindung liegt die Aufgabe zugrunde, bei relativ kurzen Kontaktzeiten zwischen Gas und Mikroorganismen haltiger Suspension bei hoher Mikroorganismenkonzentration und im Verhältnis zu den zu reinigenden Gasvolumina geringen Mengen an wässriger Suspension hohe Abbauleistungen zu erreichen.

Gegenstand der vorliegenden Erfindung ist ein Verfahren zur Reinigung von sauerstoffhaltigen Gasen, die durch biologisch abbaubare Substanzen verunreinigt sind, durch in Kontakt bringen der Gase mit einer wässrigen Suspension geeigneter Mikroorganismen, das dadurch gekennzeichnet ist, dass

a) die Kontaktzeit zwischen Gas und Suspension 0,5-5 Sekunden beträgt,

b) die Suspension anschliessend nach einer Verweilzeit von 3-10 Minuten erneut mit Gas in Kontakt gebracht wird,

c) der Suspension ständig aktive Biomassesuspension in Mengen von 0,5 bis 5 Vol.% bezogen auf die wässrige Suspension zugeführt wird, wobei ferner

d) überschüssige Suspension abgeleitet wird.

Durch die ständige Zufuhr aktiver Biomasse in den Kreislauf der Suspension zwischen Kontakt mit dem Gas und Verweilzeit gelingt es, in der Suspension eine hochaktive Biomasse aufrechtzuerhalten, die bei der geringen Schadstoffkonzentration, das heisst bei geringer Nährstoffkonzentratiion, eine hohe Abbauleistung zeigt.

Der Kontakt zwischen Gas und Flüssigkeit erfolgt in einem Verhältnis von Gasvolumenstrom unter Normalbedingungen zu Flüssigkeitsvolumenstrom von 6 bis 30, wobei gleichzeitig eine grosse Oberfläche für den Übergang von Gas in die Flüssigkeit durch Tröpfchenbildung erzeugt wird.

Bevorzugt werden als Vorrichtung zur Erzeugung des Gasflüssigkeitskontaktes Strahlwäscher oder Venturiwäscher eingesetzt. Während des Kontaktes zwischen Gas und Flüssigkeit gehen die Schadstoffe auf der Oberfläche der Flüssigkeitströpfchen in Lösung. Die hochaktive Biomasse führt gleichzeitig zu einem ständigen Abbau, so dass auf der Flüssigkeitsoberfläche ein Konzentrationsgefälle aufrechterhalten wird und sich in der Grenzschicht die Sättigungskonzentration nicht einstellen kann.

Diese besonders hohe Kurzzeitaktivität der Biomasse, die während der Kontaktzeit zwischen Gas und Suspension von Bedeutung ist, wird durch die Verweilzeit nach dem Kontakt erzeugt, indem hier ein vollständiger Schadstoffabbau erfolgt, ohne dass weitere Schadstoffe zugeführt werden.

Die Suspension wird demnach im wesentlichen schadstofffrei erneut mit dem Gas in Kontakt gebracht. Dieser im wesentlich vollständige Abbau der Schadstoffe während der Verweilzeit wird erreicht, indem eine Rückvermischung der Suspension während der Verweilzeit vor dem wieder in Kontakt bringen mit dem Gas möglichst vermieden wird.

Dabei hat sich gezeigt, dass im allgemeinen eine zweistufige Ausführung des Verweilzentrums ausreichend ist.

Die Biomassekonzentration in der Suspension beträgt vorzugsweise 0,2-1 g Trockensubstanz pro Liter Suspension, besonders bevorzugt 0,5-0,8 g Trockensubstanz pro Liter.

Die Konzentration der ständig zugeführten aktiven Biomasse beträgt vorzugsweise 0,5-2 g Trockensubstanz pro Liter, wobei die Konzentration besonders bevorzugt mehr als 0,8 g Trockensubstanz pro Liter aufweisen soll. Konzentrationen von 1 g Trockensubstanz pro Liter sind im allgemeinen ausreichend.

Die erfindungsgemäss zuzuführende aktive Biomasse wird zweckmässigerweise in einem Fermenter erzeugt. Der Fermenter wird als Blasensäule betrieben, wobei die der Blasensäule zugeführte Luft die Abluftinhaltstoffe in hoher Konzentration oder den Abluftinhaltsstoffen bezüglich des biologischen Abbaus sich ähnlich verhaltende Stoffe enthält. Auf Grund der längeren Kontaktzeit von Luft und wässriger Suspension im Fermenter (Blasensäule!) kann im Fermenter eine hohe Biomassekonzentration mit ausreichender Nährstoffversorgung aufrechterhalten werden.

Im übrigen sind die dem Biochemiker bekannten Massnahmen zu treffen, wie pH-Wertstabilisierung, Temperaturstabilisierung, Nährsalzzugabe und Ausschleusung von Stoffwechselprodukten. Erfindungsgemäss wird vorzugsweise ein pH-Wert von 7-8 aufrechterhalten. Dies kann durch Zugabe von Soda bzw. Bicarbonat erfolgen. Die Temperatur sowohl im Fermenter als auch der Suspension, die mit dem Abgas in Kontakt kommt, soll 25-35° C, vorzugsweise etwa 30° C betragen.

Mit dem erfindungsgemässen Verfahren gelingt es, auch im allgemeinen als schwerabbaubar geltende Substanzen wie aliphatische und aromatische chlorierte Kohlenwasserstoffe zu einem drittel aus der Abluft zu entfernen. Bei zweistufiger Betriebsweise, das heisst wenn einer ersten erfindungsgemässen Reinigung eine zweite erfindungsgemässe Reinigung nachgeschaltet wird, beträgt der Abbau 50% dieser schwerabbaubaren Substanzen.

Als besonders vorteilhaft bei dem erfindungsgemässen Verfahren hat sich gezeigt, dass dieses relative unempfindlich ist gegen plötzlich erhöhte Gehalte an sauren und/oder alkalischen Gasen aufgrund der Möglichkeit einer schneller Anpassung der pH-Steuerung. Das erfindungsgemässe Verfahren ist daher besonders geeignet als erste Stufe in einer mehrstufigen Gasreinigungsanlage, bei der die nachgeschaltete (biologische) Stufe z.B. aus einem mit Aktivkohlegranulat gefüllten Tropfkörper bestehen kann. Solche Tropfkörper alleine sind sehr stark anfällig gegen pH-Wert und Temperaturschwankungen. Wenn die erfindungsgemässe Abgasbehandlung dem Tropfkörper vorgeschaltet wird, wird die Leistungsfähigkeit des Tropfkörpers insbesondere bei Langzeitbetrieb aufgrund des Puffereffekts der vorgeschalteten Wäsche synergistisch verbessert.

Die Erfindung wird nachfolgend anhand eines Ausführungsbeispiels näher erläutert:

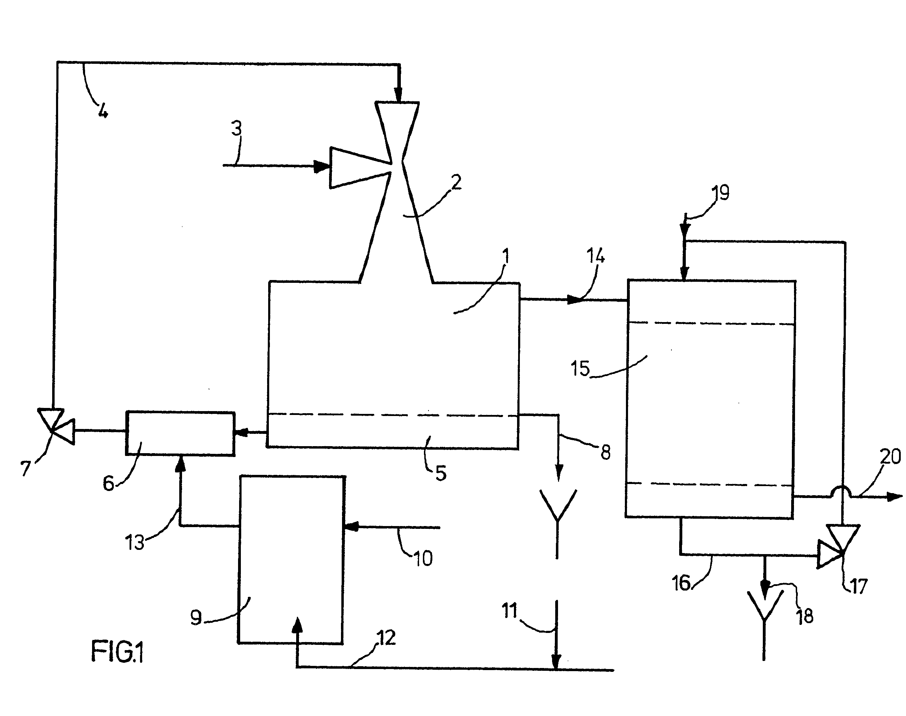

Fig. 1 zeigt die Anordnung für das Beispiel. Der Strahlwäscher 1 mit der Strahldüse 2 wird über Leitung 3 mit dem Abgas beaufschlagt. Über Pumpe 7 wird über Leitung 4 die wässrige Mikroorganismensuspension in den Strahlwäscher gepumpt. Am Boden 5 des Strahlwäschers sammelt sich die Mikroorganismensuspension nach dem Kontakt mit dem Abgas. Die zweite Verweilzeitsufe für die Mikroorganismensuspension zur Vermeidung der Rückvermischung ist mit 6 bezeichnet. Gleichzeitig wird über Leitung 13 aus dem Fermenter 9 aktive Biomasse dem Verweilzeitraum 6 ständig zugeführt. Der Fermenter 9 wird über Leitung 12 belüftet, wobei dem Belüftungsgas über Leitung 11 gasförmige Nährstoffe, die bezüglich des biologischen Abbaus den Schadstoffen im Abgas an Menge und Art bezüglich der Abbaureaktion entsprechen, zugespeist. Ferner wird über Leitung 10 Mineralsalzpufferlösung zugeführt. Aufgrund des Zustroms auf Leitung 13 fliesst über Leitung 8 überschüssige Mikroorganismensuspension aus dem Strahlwäscher 1 über. Die vorgereinigte Abluft wird über Leitung 14 einem mit Aktivkohlegranulat gefüllten Tropfkörper 15 zugeführt. Der Tropfkörper wird durch über Leitung 16 und Pumpe 17 umgepumptes Wasser feucht gehalten und bezüglich pH-Wert und Temperatur geregelt. Über Leitung 19 werden Mineralsalzpufferlösung zugespeist. Überschüssige wässrige Lösung wird über Leitung 18 ausgeschleust. Über Leitung 20 wird das gereinigte Abgas ausgeschleust. Im einzelnen wurden folgende Bedingungen eingehalten:

Der Fermenter 9 hatte einen Inhalt von 30 l, wobei stündlich 2 l Nährsalzlösung mit

300 mg $(NH_4)_2HPO_4$
200 mg $MgSO_4$
32 mg $KCl$
30 mg $CaCl_2$
1000 mg $NaHC_3$
zugespeist wurden.

Über Leitung 12 wurden dem Fermenter 250 l Liter Gas pro Stunde zugespeist, wobei über Leitung 11

3,3 ml/h Methylenchlorid
1,25 ml/h Toluol

0,83 ml/h Xylol (technisch) und
0,41 ml/h Chlorbenzol
der Luft zugegeben wurden.

Aus dem Fermenter wurden stündlich 2 l pro Stunde Biomassesuspension mit einem Gehalt von 1 g Trockensubstanz/l entnommen. Im Strahlwäscher 1 wurden über Leitung 4 1,4 m³ pro Stunde Suspension umgepumpt.

Am Boden 5 des Strahlwäschers und im Verweilzentrum 6 des Strahlwäschers befanden sich je ein Suspensionsvolumen von 80 l. Bei 3 wurden 10 m³ Luft pro Stunde eingespeist. Das Abgas wurde anschliessend in eine Tropfkörpersäule von 300 mm Durchmesser und einer Füllhöhe von 780 mm übergeführt, wobei der Tropfkörper eine Füllung von 22 kg granulierte A-Kohle enthielt.

Die Schadstoffgehalte der zugeführten Abluft, die Gehalte am Ausgang des Strahlwäschers sowie am Ausgang des Tropfkörpers sowie die Gesamtschadstoffreduktion im gereinigten Abgas sind in der nachfolgenden Tabelle 1 für drei verschiedene Belastungen angegeben.

*(Tabelle am Ende des Patents)*

## Patentansprüche

1. Verfahren zur Reinigung von Sauerstoff enthaltenden Gasen, die durch biologisch abbaubare Substanzen verunreinigt sind, durch in Kontakt bringen der Gase mit einer wässrigen Mikroorganismensuspension, dadurch gekennzeichnet, dass

a) die Kontaktzeit zwischen Gas und Suspension 0,5-5 Sekunden beträgt,

b) die Suspension anschliessend nach einer Verweilzeit von 3-10 Minuten erneut mit Gas in Kontakt gebracht wird,

c) der Suspension ständig aktive Biomassesuspension in Mengen von 0,5-5 Vol.% bezogen auf die wässrige Suspension zugeführt wird, wobei ferner

d) überschüssige Suspension abgeleitet wird.

2. Verfahren nach Anspruch 1, dadurch gekennzeichnet, dass die Biomassekonzentration in der wässrigen Suspension 0,2-1 g TS/l, vorzugsweise 0,5-0,8 TS/l, beträgt.

3. Verfahren nach Anspruch 1 oder 2, dadurch gekennzeichnet, dass die zugeführte aktive Biomasse eine Konzentration von 0,5-2 g TS/l aufweist.

4. Verfahren nach einem der Ansprüche 1 bis 3, dadurch gekennzeichnet, dass die zugeführte aktive Biomasse in einem Fermenter mit auf die Gasinhaltsstoffe abgestimmter Schadstoffkonzentration gezüchtet wird.

5. Verfahren nach einem der Ansprüche 1 bis 4, dass zur Kontaktierung von Gas und Suspension ein Strahlwäscher oder Venturiwäscher eingesetzt wird.

6. Verfahren nach einem der Ansprüche 1 bis 5, dadurch gekennzeichnet, dass während der Verweilzeit der Suspension, bevor diese wieder mit Gas in Kontakt gebracht wird, eine vollständige Rückvermischung durch zumindest zweistufige Ausführung des Verweilzeitraumes vermieden wird.

7. Verfahren nach einem der Ansprüche 1 bis 6, dadurch gekennzeichnet, dass das Abgas nach dem Kontakt mit der Suspension einer 2. biologischen Reinigung unterzogen wird.

8. Verfahren nach Anspruch 7, dadurch gekennzeichnet, dass die zweite biologische Reinigung in Form eines Aktivkohlegranulattropfkörpers ausgeführt ist.

## Revendications

1. Procédé d'épuration de gaz contenant de l'oxygène qui sont contaminés par des substances biodégradables, par mise en contact des gaz avec une suspension aqueuse de micro-organismes, caractérisé en ce que

a) la durée de contact entre le gaz et la suspension s'élève à 0,5-5 secondes,

b) la suspension est remise en contact avec le gaz après une durée de séjour de 3 à 10 minutes,

c) la suspension active de biomasse est constamment amenée à la suspension en quantités de 0,5 à 5% en volume par rapport à la suspension aqueuse, et en outre

d) la suspension en excès est évacuée.

2. Procédé suivant la revendication 1, caractérisé en ce que la concentration de la biomasse dans la suspension aqueuse est de 0,2 à 1 g de substance sèche/l, de préférence de 0,5 à 0,8 g de substance sèche/l.

3. Procédé suivant la revendication 1 ou 2, caractérisé en ce que la biomasse active amenée présente une concentration de 0,5 à 2 g de substance sèche/l.

4. Procédé suivant l'une des revendications 1 à 3, caractérisé en ce que la biomasse active amenée est cultivée dans un appareil de fermentation avec une concentration en substances polluantes réglée par rapport aux composants gazeux.

5. Procédé suivant l'une des revendications 1 à 4, caractérisé en ce qu'un dispositif de lavage à jet ou un dispositif de lavage à venturi est utilisé pour la mise en contact du gaz et de la suspension.

6. Procédé suivant l'une des revendications 1 à 5, caractérisé en ce que, pendant la durée de séjour de la suspension, avant que cette dernière ne soit remise en contact avec le gaz, on évite un remélangeage total par la réalisation en deux temps au moins de l'intervalle de séjour.

7. Procédé suivant l'une des revendications 1 à 6, caractérisé en ce que le gaz évacué est soumis après le contact avec la suspension à une seconde épuration biologique.

8. Procédé suivant la revendication 7, caractérisé en ce que la seconde épuration biologique est réalisée sous la forme d'un lit percolateur de granules de charbon actif.

## Claims

1. Process for purifiying oxygen-containing gases which are contaminated with biodegradable substances, by bringing the gases into contact with an aqueous suspension of microorganisms, characterised in that

a) the period of contact between the gas and the suspension is 0.5-5 seconds,

b) the suspension is then, after a retention time of 3-10 minutes, again brought into contact with the gas,

c) an active biomass suspension is continuously introduced into the suspension in amounts of 0.5-5% by volume, based on the aqueous suspension,

d) excess suspension also being drawn off.

2. Process according to Claim 1, characterized in that the biomass concentration in the aqueous suspension is 0.2-1 g of dry substance per litre, preferably 0.5-0.8 g of dry substance per litre.

3. Process according to Claim 1 or 2, characterized in that the active biomass introduced has a concentration of 0.5-2 g of dry substance per litre.

4. Process according to one of Claims 1 to 3, characterised in that the active biomass introduced is cultured in a fermenter with a noxious substance concentration adapted to the substances contained in the gas.

5. Process according to one of Claims 1 to 4, characterised in that a jet washer or Venturi washer is used for contacting the gas and the suspension.

6. Process according to one of Claims 1 to 5, characterised in that, during the retention time of the suspension, before the latter is again brought into contact with the gas, complete remixing is avoided by dividing the retention period into at least two stages.

7. Process according to one of Claims 1 to 6, characterised in that the off-gas is subjected to a 2nd biological purification after being contacted with the suspension.

8. Process according to Claim 7, characterised in that the second biological purification takes the form of a granulated active carbon trickling filter.

*Tabelle 1*
(Messwerte in mg/m³)

| Luftmenge | Eingang | Ausgang Strahlwäscher | Ausgang Tropfkörper | Gesamt-Reduktion (%) | Eingang | Ausgang Strahlwäscher | Ausgang Tropfkörper | Gesamt-Reduktion (%) | Eingang | Ausgang Strahlwäscher | Ausgang Tropfkörper | Gesamt-Reduktion (%) |
|---|---|---|---|---|---|---|---|---|---|---|---|---|
| | 12 m³/h | | | | 5 m³/h | | | | 3 m³/h | | | |
| Methylchlorid | 21 | 17,5 | 9 | 57 | 21 | 17 | 6 | 71 | 17,5 | 13,5 | 3 | 83 |
| Ethylchlorid | 78 | 67 | 35,5 | 54 | 71,5 | 62,5 | 27 | 62 | 6,6 | 5 | 2 | 70 |
| Dichlormethan | 120 | 97,5 | 49,5 | 59 | 132,5 | 120 | 50,5 | 62 | 155 | 140 | 66,5 | 57 |
| Dichlorethan | 140 | 86 | 22,5 | 84 | 90,5 | 60 | 18,5 | 77 | 110 | 79 | 31 | 72 |
| Dimethylether | 83 | 53 | 28,5 | 65 | 61,5 | 43 | 20,5 | 67 | 64 | 47 | 22,5 | 65 |
| Benzol | 2 | 2 | <1 | 50 | 1 | <1 | <1 | 100 | 1 | 1 | <1 | |
| Toluol | 22 | 18,5 | 2 | 91 | 15,5 | 13,5 | <2 | 87 | 7 | 6,5 | <2 | 71 |
| Xylol | 84 | 60,5 | <2 | 98 | 75 | 60 | <2 | 97 | 45 | 25 | <2 | 96 |
| Ethylbenzol | 33 | 25,5 | <2 | 94 | 21,5 | 16,5 | <2 | 91 | 14,5 | 9 | <2 | 86 |
| Chlorbenzol | 15 | 10,5 | <2 | 87 | 8,5 | 7 | <2 | 76 | 3,5 | 3,5 | 2 | 43 |
| Chlortoluole | 22 | 13 | <2 | 91 | 17 | 13,5 | <2 | 88 | 8 | 5 | <2 | 75 |
| Σ Kohlenwasserstoffe bez. auf Propan | 294 | 207,5 | 45 | 85 | 249 | 201,5 | 39 | 84 | 165,5 | 117,5 | 27 | 84 |

FIG.1

0 133 222